# EUROPEAN PATENT APPLICATION

(11) **EP 3 453 461 A1**
(43) Date of publication of application: **13.03.2019**
(21) Application number: 17397522.8
(22) Date of filing: 08.09.2017
(51) Int. Cl.: B03C 3/02, B03C 3/12, B03C 3/78

(54) **AIR PURIFIER UNIT**

(71) Applicant: Aavi Technologies Ltd, 00880 Helsinki (FI)
(72) Inventor: RANTANEN, Pekka, 00880 Helsinki (FI); LIPPOJOKI, Ismo, 00880 Helsinki (FI); SIITONEN, Eero, 00880 Helsinki (FI); KATTELUS, Juuso, 00880 Helsinki (FI)
(74) Representative: Seppo Laine Oy

(57) **Abstract**

The present invention concerns an air purifier unit comprising an electrostatic precipitator, that can be affixed to an air handling unit (AHU) in order to replace conventional mechanical filters. The air purifier unit of the present invention comprises one or more modules that can be assembled in parallel, each module comprising of two consecutive cleaning units and a washing system, which washing system is arranged for dispensing a cleansing solution into the collector. The air containing particles to be removed flows in channels between essentially parallel, essentially smooth surfaces usually situated at a fixed distance from each other. In an air purifier unit according to the invention, the ratio between effective length and distance between channel walls, i.e. collector plates, shall be at least 10.

## Description

### Field of the Invention

The present invention concerns an air purifier unit that can be affixed to an air handling unit (AHU) in order to replace conventional mechanical filters. Particularly, the present invention relates to an air purifier unit with an electrostatic precipitator.

### Description of Related Art

An air purifier is a device that is used in order to clean the air in a room from dust and other contaminants. Air purifiers can be based on various kinds of collection principles of contamination, such as mechanical filtration, precipitation, activated carbon, gravitation, and centrifugation. Commercial air purifiers can operate either as small stand-alone units, especially in individual rooms and households, or as larger units that can be affixed, as one of the major components, to an air handling unit (AHU). An air handling unit is usually a large compartment containing a blower, heating or cooling elements, filter racks or chambers, sound attenuators, and dampers. Large air purifier units are used especially on an industrial scale, but also in AHU's serving whole buildings.

An electrostatic precipitator (ESP), or an electrostatic air purifier, is a device that removes fine particles, like dust and smoke, from a flowing gas by electrostatic attraction. However, it does not work on odors or kill germs. An ESP includes an ionizer which ionizes, or electrically charges, particles of the incoming air. The charged particles are then attracted to and trapped by collector plates that are oppositely charged. The trapped particles stick to the plates until they are removed. Collector plates are usually formed as an assembly of parallel conductive plates or nested cylinders.

Particles accumulated on a collector must be regularly removed in order to maintain good purification efficiency. Depending on the method by which particles are removed from the collector plates, ESPs may be divided into two categories: dry and wet. The dry variant is the most abundantly used, basic form of an ESP. In industrial-scale dry ESPs the removal of accumulated dust can be accomplished by using rappers: the dirt and dust is shaken loose by vibration.

In wet precipitators, a continuous supply of water is used for forming a wet layer on the surfaces of the collector to remove the dirt therefrom.

EP 0995494 A2 describes an air filtering device in the form of an electrostatic precipitator, comprising an array of a plurality of electrically charged plates spaced apart to allow flow of air through the array. The array of plates comprises a plurality of cylindrically shaped plates of differing diameters positioned in a coaxial array about a central discharge rod.

US 850321 describes an air purifier comprising corona discharge point electrodes mounted on a carrier connected with a source of high tension and arranged in an exhaust duct provided with openings for the introduction of air, incandescent means arranged before the corona discharge point electrodes and a plurality of electrically charged members arranged after the corona discharge point electrodes.

JP 2002035641 A discloses a washing device for an electrostatic dust collector in which a plurality of dust-collecting plates is arranged parallel to each other. The washing device consists of a multistage cylinder having water washing nozzles fitted to its front end.

US 4240809 discloses an electrostatic air cleaner intended for commercial and industrial air cleaning applications. The air cleaner includes a number of precipitator cells having spaced parallel plates for collecting dirt particles, and a vertically disposed traversing pipe-like spray header containing spray nozzles.

In Korean patent KR101436381 is disclosed an electrostatic precipitator having two units in parallel whereby the units may be operated alternately, one being cleaned from accumulated material.

### Summary of the Invention

The present invention provides an improved air purifier unit that can be affixed to existing air handling units (AHUs) in order to replace mechanical filters. The invention aims at providing high purification efficiency and a self-cleaning air purifier unit design for air handling on an industrial scale.

The invention is defined by the features of the independent claims. Some specific embodiments are defined in the independent claims.

Thus, the present invention concerns an air purifier unit that can be attached to an AHU in order to replace conventional mechanical filters. The air purifier unit of the present invention comprises one or more modules that can be assembled in parallel, each module comprising of two consecutive cleaning units and a washing system, which washing system is arranged for dispensing a cleansing solution into the collector.

The cleaning unit of the present air purifier unit comprises an ionizer and a collector, thereby functioning as an electrostatic air purifier. In addition, the cleaning units require high-voltage sources to ionize or electrically charge the particles of the incoming air. An automatic washing system is used to wash the cleaning units in order to maintain efficient operation of the air purifier.

The linear velocity of air streams in air handling units is commonly in the range of 2 to 2.5 m/s. To provide effective purification, cleaning units in air purifier units for AHU applications should be dimensioned accordingly. Preferably, the distance between the collector plates is at least 4 mm; advantageously, the distance between collector plates is at least 6 mm.

As set out above, the collector plates in an electrostatic precipitator are usually formed as an assembly of parallel conductive planar plates or nested cylinders. Thus, the air containing particles to be removed flows in channels between essentially parallel, essentially smooth surfaces usually situated at a fixed distance from each other. The effective length of the air channels in the collectors within these air purifier units is defined as the length in the air flow direction of undisturbed channel between points of discontinuity due to supporting structures. "Undisturbed channel" in this context means an area of the channel formed by a continuous surface of the walls defining the channel, said surface containing no protruding or receding structures which would disturb the flow of fluid through the channel. Examples of such structures which would disturb the flow are attachment points for supporting structures and holes for structures passing through a wall without contact with the wall. A "supporting structure" in this context is a structural component which holds together the package of plates and limits the undisturbed area. In an air purifier unit according to the invention, the ratio between effective length and distance between channel walls, i.e. collector plates, shall be at least 10, preferably 15.

Thus, in an arrangement where the distance between the collector plates is 4 mm, the effective channel length is at least 60 mm. In an arrangement where the distance between the collector plates is 6 mm, the effective channel length is at least 90 mm.

Several advantages are achieved using the present invention. Since an air purifier unit can be comprised of several modules, the air purifier unit of the present invention can cover filtering requirements for air handling units of different sizes on an industrial scale. Among others, the air purifier unit of the present invention provides an advantageous possibility to retrofit the unit to an existing AHU. Thereby, it provides an opportunity to improve already existing AHUs without the need for total renewal of the whole unit.

Each module of the air purifier unit will continue to clean air regardless of failure of an individual cleaning unit, since there are two consecutive cleaning units in each module. In addition, there are preferably several modules in parallel. This decreases the need for maintenance even more. Consecutive and parallel in this context means the location of the units relative to the air flow path. The total flow passes through consecutive units in sequence, while with parallel units the air flow path may be divided between the units. In the latter case, closing one unit means conveying the total flow through the remaining unit(s).

The air purifier unit of the present invention does not require frequent replacement or maintenance of the parts, even in very dirty conditions, because the unit preferably comprises an automatic washing and drying system. In addition, in this way the washing efficiency will not be dependent on the skills of the responsible person.

A further advantage of an automatic washing system is that the washing solution can be less concentrated, as it can be dispensed effectively onto the plates instead of by passive soaking by maintenance staff. Also the time needed for the plate cleaning operation can be reduced because no disassembly or demounting of the collector plates is needed.

A further advantage is that as the performance of the collector plates can be kept high, the air purifier unit does not necessarily need any other filters but can rely on the ionizer and the electrostatic precipitator to reach a sufficient purification result.

### Brief Description of the Drawings

FIGURE 1 is a schematic drawing of an air handling unit indicating its main components, showing the location of an air purifier unit installed according to the present invention.
FIGURE 2 illustrates an example module of the air purifier unit of the present invention in accordance with at least some embodiments of the present invention;
FIGURES 3 and 4 show different embodiments of air purifier unit configurations, especially concerning the location of the high-voltage sources, according to the present invention.

### Embodiments

The invention provides an air purifier unit with an improved structure and an integrated washing system.

The air purifier unit of the present invention comprises a module or several modules which can be assembled in parallel, each module comprising two consecutive cleaning units and an automatic washing system.

The cleaning units comprise an ionizer and a collector. The ionizer is located in front of the collector in order to charge the particles and enable the collector to trap those particles. The ionizer comprises charged electronic surfaces or needles, which generate electrically charged air or gas ions which attach to airborne particles. The collector includes electrostatic collector plates, and the ratio between effective channel length and distance between the collector plates shall be at least 10, preferably at least 15.

The material of the collector plates may be any suitable conducting material, for example a metal or an electrically conductive plastic or an electrically conductive polymer. Suitable electrically conductive polymers include polyfluorenes, polyphenylenes, polypyrenes, polyazulenes, polynaphthalenes, polypyrroles, polycarbazoles, polyindoles, polyazepines, polyanilines, polythiophenes, poly(3,4-ethylenedioxythiophene), poly(p-phenylene sulphide), polyacetylenes, poly(p-phenylene vinylene). Suitable metals include stainless steel and aluminium in any suitable form, such as a plate or a grid.

According to a further embodiment, the automatic washing system is used to clean the cleanings units, especially the collector, from accumulated particles. Preferably, the integrated washing system is in the form of washing nozzles, which nozzles are arranged for spraying a cleansing solution onto the collector plates. Preferably, the nozzles are located in the module between the two cleaning units in order to utilize one washing system for both cleaning units.

In some embodiments, dispensing of the cleansing solution can be done either by utilizing gravitational force or by applying pressure.
The air purifier is preferably provided with a control system which indicates the need for collector plate cleaning at regular intervals. The washing system can be arranged to be activated by an operator, or the control system which starts the washing process automatically according to need and/or timing.

According to a preferred embodiment, the air purifier unit also includes an automatic drying system which can be utilized for drying the washed plates quickly. Preferably, the drying is done by means of a fan arrangement. The drying system can be used as preheater before washing when the incoming air is cold, below 0 °C, so that there is a danger of freezing.

According to one embodiment, the module is complemented with at least one activated carbon filter which provides the further advantage of removing ozone. Adsorption onto activated carbon acts to remove odours, certain gases and vapours from the air.

Preferably, during the washing of the cleaning units, the module is separated in a waterproof manner by closing mechanisms. Closing mechanisms enable the washing of just one module at a time. Thereby, each module can be washed when the degree of accumulated particles is high enough to cause a threat of decreased purification efficiency. Other modules can still continue operating, which is cost-efficient since the whole unit does not have to be washed simultaneously.

Embodiments are shown in further detail in the enclosed drawings.

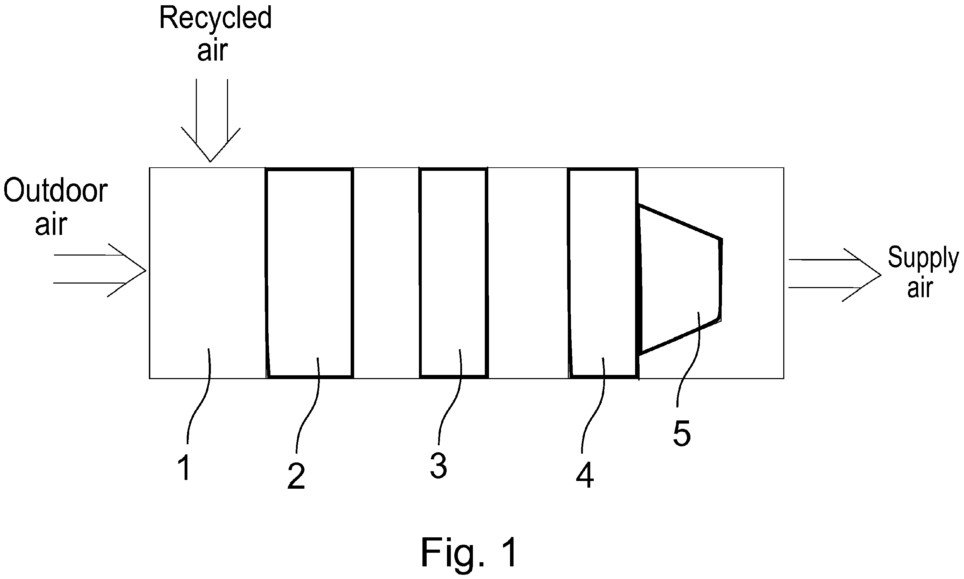

Fig. 1 illustrates the general design of an air handling unit. The shape and proportions of the device and the order of the components in the air stream are in no way mandatory. In the configuration shown, air enters on the left and the entering air may be a mixture of recycled air and ambient air as shown. The incoming air streams are mixed in the entry chamber 1, after which the combined stream passes through a filtering section 2. This section is conventionally designed using mechanical filters which may be changed periodically, or based on pressure loss measurement. According to the present invention, the filtering section 2 comprises at least one air purifier module comprising at least two consecutive cleaning units.

Next, the air stream passes a cooling section 3 and a heating section 4. A blower 5, which may be of a variety of types, propels the air through the unit.

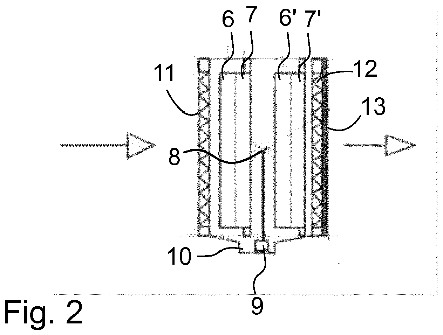

Fig. 2 illustrates a single module of the present air purifier unit. The module comprises two consecutive cleaning units which include ionizers 6, 6' and collectors 7, 7'. The module further comprises a washing system 8, a washing pump 9 and a wash liquid reservoir 10 at the bottom of the module. Closing mechanisms 11, 12 are located on the front and back of the module, respectively. In addition, an activated carbon filter 13 is located as a last component, after the second closing mechanism. Thus, the water and humidity sensitive carbon filter can be isolated during the washing.

According to Fig. 2, the incoming air is introduced to the purifier unit from the left. The air is first arranged to pass through the ionizer of the first cleaning unit, after which the collector traps charged particles. Subsequently, the same will happen in the second cleaning unit. The air is now essentially purified, but in order to eliminate gaseous impurities, the air will still pass through the carbon activated filter.

In one embodiment, after activation of the washing system the nozzles spray a cleaning solution into the cleaning unit for a predetermined period of time. The cleaning solution flows downwards through the cleaning units, and finally into a reservoir at the bottom of the purifier. Preferably, the washed cleaning units are dried by means of the drying system. The drying mode can be automatically activated for a predetermined period of time after the spraying has been completed.

The used cleaning solution can be conducted to a container located at the bottom of the module, or it can be pumped to a remote container, or it can be directed to drainage.

The preparation and supply of a suitable cleaning solution can be accomplished in many ways. In one embodiment the air purifier has integrated container into which a ready-to-use cleaning solution is poured before activating the washing system. In another embodiment, only water is poured into the integrated container, and the purifier is arranged to add a suitable amount of liquid or solid cleaning agent (e.g. in the form of solid tablets or powder) to the water from a separate integrated container which preferably is dimensioned for serving several washing rounds. In yet another embodiment, the purifier connected by hoses to an external water supply (e.g. a tap) that provides water to the integrated container. In this embodiment, user efforts are minimized once the purifier has been installed.

Suitable cleaning solutions include aqueous solutions of surfactants, aqueous solutions of dishwasher detergents, aqueous solutions of non-foaming detergents and aqueous solutions of sodium hydroxide.

In one embodiment, the drying system is located outside the module and comprises a blower and closing dampers. The closing dampers can be either actuated or self-acting. In one embodiment, the drying system comprises a fan, a heat pump, an evaporator (condenser for water to be dried) and condenser.

According to a preferred embodiment, each cleaning unit has separate high-voltage source. A unit including just one module preferably comprises a high-voltage source located in a sealed compartment in connection with the module. This is preferred, since no long high-voltage cables or connectors are required. In addition, the cooling of the high-voltage generators occurs with the air flow being cleaned.

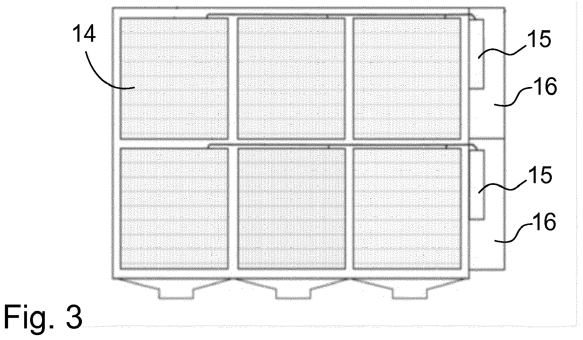

According to one embodiment, in a unit which includes more than one module, the high-voltage sources are placed in sealed compartments outside the modules. Figure 3 illustrates an example of an air purifier unit, which includes several modules 14, wherein the high-voltage sources 15 are located in sealed compartments 16 outside the modules.

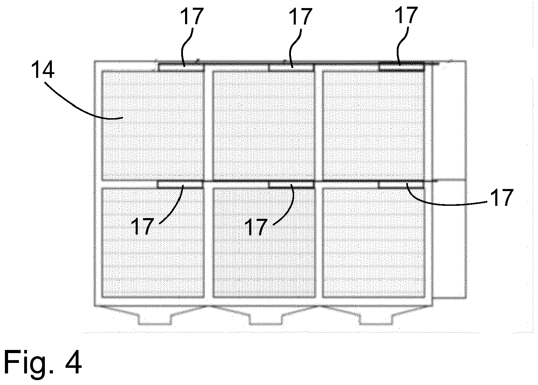

Figure 4 shows a further embodiment comprising several modules 14, whereby the high-voltage components 17 of the high-voltage sources are located in sealed compartments adjacent to the modules. Other required electronics may be located outside the modules.

According to a preferred embodiment, the air purifier unit of the present invention can be retrofitted to an existing AHU.

In a preferable embodiment, the air purifier unit is an industrial-scale purifier. In industrial-scale purifiers, the linear air flow during the purification is typically in the range 2 to 2.5 m/s.
Modules can be assembled in parallel in order to achieve sufficient flow surface area and volume flow of the air to be cleaned. The possibility to vary the number of modules in the unit enables the air purifier unit of the present invention to cover filtering requirements for AHUs of different sizes.

According to one embodiment, failure of the cleaning units is detected through voltage and current monitoring and the information can be forwarded for maintenance purposes. The system may be also protected against electrical overload, and comprises breakdown detection followed by recovery to the normal state.

According to a further embodiment, the present invention may also comprise a control system for measurement of aerosol concentration of incoming and/or output air, applying voltage reduction and electrical power limitation if the incoming air is so clean that the cleaning power can be reduced. Lowering the voltage reduces production of ozone.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and examples of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In this description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The non-limiting examples given are intended merely to illustrate the advantages obtained with the embodiments of the present invention.

### Industrial Applicability

The present air purifier unit can be used as an air purifier in air handling units, and generally for replacement of conventional mechanical filters.

### Reference Signs List

- 1: mixing chamber
- 2: filtering section
- 3: cooling section
- 4: heating section
- 5: blower
- 6, 6': ionizer
- 7, 7': collector
- 8: washing system
- 9: washing pump
- 10: wash liquid reservoir
- 11, 12: closing mechanism
- 13: active carbon filter
- 14: module of air purifier
- 15: high voltage source
- 16: sealed compartment
- 17: sealed high voltage source

## Claims

1. An air purifier unit comprising at least one module, each module including
- two consecutive cleaning units, each having an ionizer and a plurality of collector plates having walls and forming channels between them for receiving an air flow, and
- a washing system,
the ratio of the length in the air flow direction of undisturbed channel wall to the distance between channel walls being at least 10.

2. The air purifier unit of claim 1, wherein the ratio of the length in the air flow direction of undisturbed channel wall to the distance between the collector plates is at least 15.

3. The air purifier unit of claim 1, wherein the distance between collector plates is at least 4 mm.

4. The air purifier unit of claim 1 or 2, wherein several modules are arranged in parallel.

5. The air purifier unit of any claim 1 to 3, wherein the washing system is in the form of washing nozzles.

6. The air purifier unit of any claim 1 to 4, comprising at least one activated carbon filter.

7. The air purifier unit of any preceding claim, wherein the module or modules comprise closing mechanisms for sealing them in a water-tight manner.

8. The air purifier unit of any preceding claim, wherein each cleaning unit has a separate high-voltage source.

9. The air purifier unit of any preceding claim, wherein high-voltage sources are placed in at least one sealed compartment outside the modules or in connection with the modules.

10. The air purifier unit of any preceding claim, wherein high-voltage components of high-voltage sources are located in sealed compartments in connection with the modules.

11. The air purifier unit of any preceding claim, which includes an automatic drying system.

12. The air purifier unit of any preceding claim, wherein the drying system is a fan system.

13. The air purifier unit of any preceding claim, comprising a control system for measurement of aerosol concentration in the incoming air and for the reduction of voltage if the incoming air is clean.

14. The air purifier unit of any preceding claim, comprising a control system for measurement of the temperature of incoming air and for initiating preheating before washing.

15. An air handling unit comprising at least one air purifier unit according to any of claims 1 to 13.
